# EUROPÄISCHE PATENTSCHRIFT

(11) **EP 1 477 720 B1**
(45) Veröffentlichungstag und Bekanntmachung des Hinweises auf die Patenterteilung: **02.11.2006**
(21) Anmeldenummer: 04006025.3
(22) Anmeldetag: 13.03.2004
(51) Int. Cl.: F16L 39/04

(54) **Vorrichtung zum Zuführen wenigstens zweier Medien zu einem rotierenden Drucksystem**
Device for supplying at least two media to a rotary pressure system
Dispositif pour fournir au moins deux médias à un système rotatif de pression

(30) Priorität: 10.05.2003 DE 10321023
(43) Veröffentlichungstag der Anmeldung: 17.11.2004
(73) Patentinhaber: Christian Maier GmbH & Co. KG Maschinenfabrik, 89520 Heidenheim (DE)
(72) Erfinder: Szam, Peter, 89547 Gerstetten (DE); Frey, Christof, 89564 Nattheim (DE)
(74) Vertreter: Dziewior, Joachim

(56) Entgegenhaltungen:
- US-A- 3 031 197
- US-A- 4 154 446
- US-A- 4 234 215

## Beschreibung

Die Erfindung betrifft eine Vorrichtung zum Zuführen wenigstens zweier Medien zu einem rotierenden Drucksystem, nämlich einem heißen Medium und einem demgegenüber kühleren Medium, bestehend aus einem Dichtkopfgehäuse sowie einem im Inneren des Dichtkopfgehäuses angeordneten Rotor, die beide gegenseitig zueinander drehbar gelagert sind, wobei das Dichtkopfgehäuse und der Rotor mit Zulaufund Ablauföffnungen für die Medien versehen sind, die über im Innern des Dichtkopfgehäuses verlaufende Verbindungsleitungen sowie über im Bereich zwischen Dichtkopfgehäuse und Rotor angeordnete Ringkanäle miteinander in Verbindung stehen, ferner mit wenigstens einer Dichtung, vorzugsweise Gleitringdichtung, die einseits oder jeweils beidseits der Ringkanäle den Rotor gegen das Dichtkopfgehäuse abdichten.

Derartige Vorrichtungen sind auch aus der Praxis in unterschiedlichen Ausgestaltungen bekannt. Die grundsätzliche Problematik bei derartigen Vorrichtungen besteht darin, daß zum einen die Dichtung durch die hohe Temperatur des heißen Mediums einer starken Belastung ausgesetzt ist und zum anderen der über die Dichtung in geringem Maße übertretende Teil des heißen Mediums (nur bei Wärmeträgeröl) mit Luftsauerstoff in Verbindung kommen und "vercracken" kann, was sich nachteilig auf die Dichtungen auswirkt.

Soweit lediglich ein Medium übertragen wird, ist es bereits bekannt (siehe z.B. das Dokument US 4234215), ein separates, gleichartiges Kühlmedium davon über eine Kühleinrichtung zu leiten, um dann mittels des abgekühlten Mediums eine Kühlung der Dichtung vorzunehmen und zugleich eine Sperre gegen den Luftsauerstoff zu bilden. Die zusätzliche Kühleinrichtung stellt jedoch einen zusätzlichen apparativen und kostenmäßigen Aufwand dar.

Der Erfindung liegt daher die Aufgabe zugrunde, eine Vorrichtung der eingangs genannten Art so zu verbessern, daß eine wirkungsvolle Kühlung der wärmebelasteten Dichtung unter möglichst geringem Mehraufwand erreicht wird.

Diese Aufgabe wird nach der Erfindung dadurch gelöst, daß in wärmeleitendem Kontakt mit der/den an den Ringkanal für das heiße Medium angrenzenden Dichtung/en eine ringförmige Kühlkammer angeordnet ist, die über Abzweigleitungen sowohl mit der Zulauföffnung als auch der Ablauföffnung für das kühlere Medium in Verbindung steht und von diesem durchströmt wird.

Der durch die Erfindung erreichte Vorteil besteht im wesentlichen darin, daß der Kreislauf des kühleren Mediums dazu herangezogen wird, die am Kreislauf des heißeren Mediums angrenzenden Dichtungen zu kühlen.

Soweit dabei das heiße Medium und das kühlere Medium von gleicher Materialbeschaffenheit, insbesondere von Wärmeträgeröl gebildet sind, empfiehlt es sich gemäß einer ersten Ausführungsform, daß die Kühlkammer von zwei radial übereinander angeordneten Ringkammern gebildet ist, die beide über wenigstens einen Querkanal miteinander verbunden sind, wobei die radial äußere Ringkammer zu dem die Dichtung aufnehmenden Ringraum hin offen und mit der Zulauföffnung für das kühlere Medium verbunden ist, während die radial innere Ringkammer mit der Ablauföffnung für das kühlere Medium verbunden ist.

Vorteilhaft ist hierbei, daß über die Dichtung austretende Leckage zu keinen Störungen oder Verunreinigungen führen kann, da die beiden Medien einander gleich sind.

Um eine über den Umfang gleichemäßige Kühlwirkung zu erzielen, ist es von Vorteil, wenn die Zulauföffnung und die Ablauföffnung einander benachbart angeordnet sind und der Querkanal diesen radial gegenüberstehend angeordnet ist.

Sind dagegen das heiße Medium und das kühlere Medium von ungleicher Materialbeschaffenheit, insbesondere das heiße Medium von Wärmeträgeröl und das kühlere Medium von Wasser gebildet sind, so wird gemäß einer zweiten Ausgestaltung der Erfindung vorgeschlagen, daß die Kühlkammer von zwei Ringkammern gebildet ist, von denen die erste mit der Zulauföffnung sowie der Ablauföffnung für das kühlere Medium unter Bildung eines Kühlkreislaufes verbunden ist, während die zweite Ringkammer zu dem die Dichtung aufnehmenden Ringraum auf der dem heißen Medium abgewandten Seite hin offen ist und mit einem Vorlagebehälter mit kühler Vorlageflüssigkeit verbunden ist, wobei die Vorlagefüssigkeit von gleicher Materialbeschaffenheit ist wie das heiße Medium.

Hierdurch ist zunächst sichergestellt, daß das eigentliche Kühlmedium, meist also das Wasser, in einem völlig geschlossenen, eigenen Kreislauf strömt, während der Leckageanteil allein mit einer stoffgleichen Vorlageflüssigkeit in Kontakt kommen kann.

Im einzelnen empfiehlt es sich hierbei , daß die beiden Ringkammern radial übereinander angeordnet sind, wobei die radial innenliegende Ringkammer mit dem Vorlagebehälter verbunden ist.

Schließlich besteht grundsätzlich bei beiden Ausgestaltungen die Möglichkeit, daß auf der, der Dichtung axial abgewandten Seite der Kühlkammer eine weitere Dichtung angeordnet ist, die entweder atmosphärenseitig oder gegen einen Ringkanal für ein weiteres Medium abdichtet.

Im folgenden wird die Erfindung an in der Zeichnung dargestellten Ausführungsbeispielen näher erläutert; es zeigen:
- Fig. 1: eine Vorrichtung nach der Erfindung in einer ersten Ausführungsform,
- Fig. 2: einen Querschnitt durch den Gegenstand nach Fig. 1 längs der Linie A - A,
- Fig. 3: eine Vorrichtung nach der Erfindung in einer zweiten Ausführungsform.

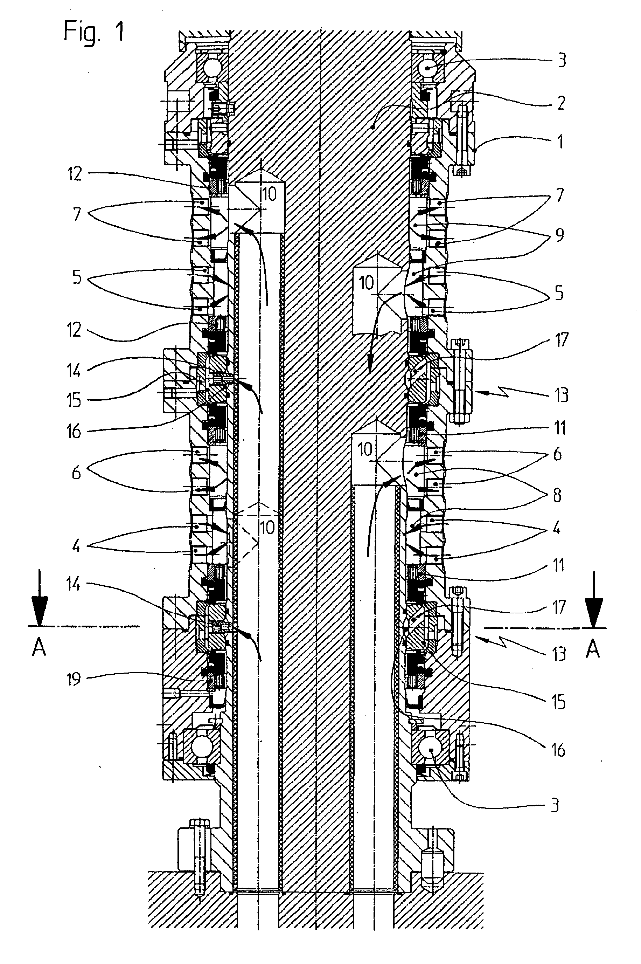

Die in der Zeichnung dargestellte Vorrichtung dient zum Zuführen wenigstens zweier Medien zu einem rotierenden Drucksystem, nämlich einerseits einem heißen Medium und andererseits einem demgegenüber kühleren Medium. Die Vorrichtung besteht aus einem Dichtkopfgehäuse 1 sowie einem im Inneren des Dichtkopfgehäuses 1 angeordneten Rotor 2, die beide gegenseitig zueinander über Wälzlager 3 drehbar gelagert sind. Dabei kann wahlweise das Dichtkopfgehäuse 1 stillstehend angeordnet sein, wie dies bei der Ausgestaltung gemäß Fig. 1 der Fall ist, oder aber auch der Rotor 2.

Das Dichtkopfgehäuse 1 und der Rotor 2 sind mit Zulaufund Ablauföffnungen 4,5,6,7 für die Medien versehen, die über im Innern des Dichtkopfgehäuses 1 verlaufende Verbindungsleitungen 10 sowie über im Bereich zwischen Dichtkopfgehäuse 1 und Rotor 2 angeordnete Ringkanäle 8,9 miteinander in Verbindung stehen.

Um die einzelnen Medienkreisläufe gegeneinander abzudichten, sind Dichtungen 11,12, vorzugsweise Gleitringdichtungen vorgesehen, die einseits oder jeweils beidseits der Ringkanäle 8,9 den Rotor 2 gegen das Dichtkopfgehäuse 1 abdichten.

Um eine thermische Entlastung der an das heiße Medium angrenzenden Dichtungen 11 zu erreichen, ist in wärmeleitendem Kontakt mit den an den Ringkanal 8 für das heiße Medium angrenzenden Dichtungen 11 eine ringförmige Kühlkammer 13 angeordnet, die über Abzweigleitungen 1 sowohl mit der Zulauföffnung 5 als auch der Ablauföffnung 7 für das kühlere Medium in Verbindung steht und von diesem durchströmt ist.

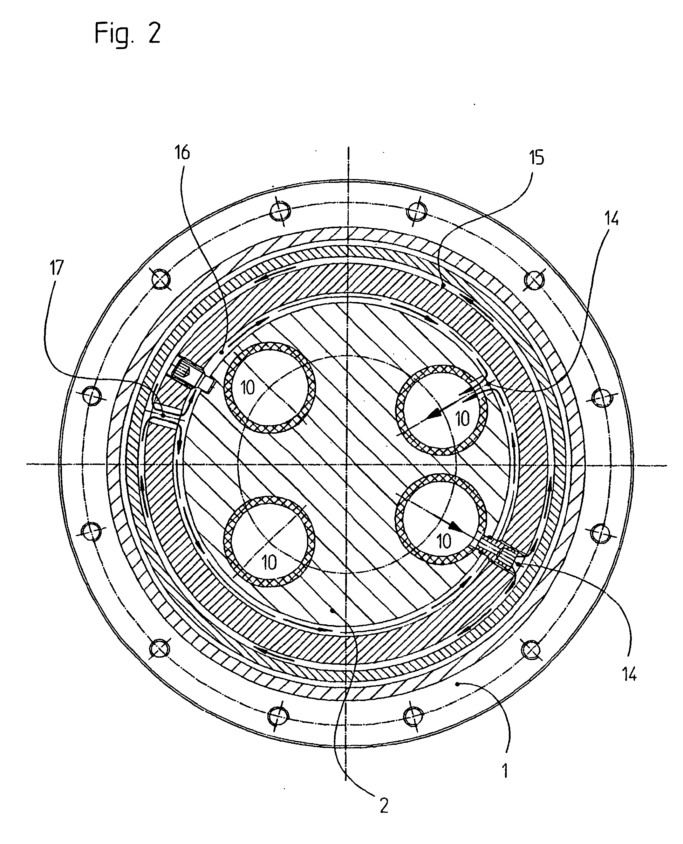

Bei der Ausführungsform nach den Fig. 1 und 2, bei der das heiße Medium und das kühlere Medium von gleicher Materialbeschaffenheit, insbesondere von Wärmeträgeröl gebildet sind, ist die Kühlkammer 13 von zwei radial übereinander angeordneten Ringkammern 15,16 gebildet. Beide Ringkammern 15,16 sind, wie sich insbesondere aus der Fig. 2 ersehen läßt, über wenigstens einen Querkanal 17 miteinander verbunden. Die radial äußere Ringkammer 15 ist dabei zu dem die Dichtung 11 aufnehmenden Ringraum 8 hin offen und mit der Zulauföffnung 5 für das kühlere Medium verbunden, während die radial innere Ringkammer 16 mit der Ablauföffnung 7 für das kühlere Medium verbunden ist. Auf diese Weise wird über den ganzen Umfang hinweg eine gleichmäßige Kühlwirkung erzielt.

Wie sich ebenfalls aus der Fig. 2 ersehen läßt, sind die Zulauföffnung 5 und die Ablauföffnung 7 einander benachbart angeordnet, während der Querkanal 17 diesen radial gegenüberstehend angeordnet ist.

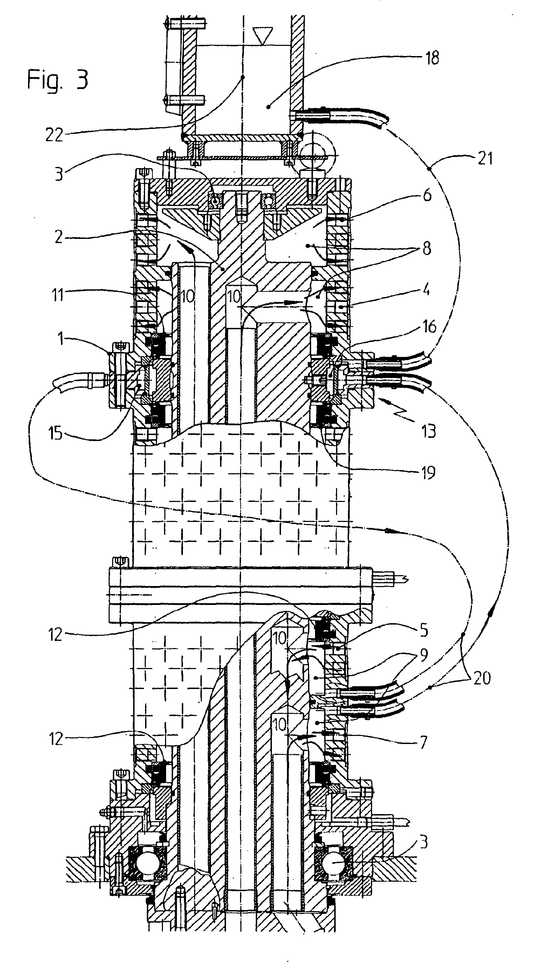

In der Figur 3 ist eine solche Ausführungsform dargestellt, bei der das heiße Medium und das kühlere Medium von ungleicher Materialbeschaffenheit sind. Während das heiße Medium insbesondere wieder aus Wärmeträgeröl bestehen kann, wird für das kühlere Medium vorzugsweise Wasser eingesetzt. Wegen der unterschiedlichen Beschaffenheit muß hier auf eine sorgfältige gegenseitige Abtrennung geachtet werden.

Auch hier ist die Kühlkammer 13 von zwei Ringkammern 15,16 gebildet, von denen die erste 15 mit der Zulauföffnung 5 sowie der Ablauföffnung 7 für das kühlere Medium unter Bildung eines Kühlkreislaufes verbunden und völlig in sich geschlossen ist. Die zweite Ringkammer 16 ist dagegen zu dem die Dichtung 11 aufnehmenden Ringraum auf der dem heißen Medium abgewandten Seite hin offen und mit einem Vorlagebehälter 18 mit kühler Vorlageflüssigkeit verbunden. Die Vorlageflüssigkeit ist vorzugsweise von gleicher Materialbeschaffenheit wie das heiße Medium, so daß eine gegenseitige Durchmischung beispielsweise durch übertretende Leckage keinerlei Probleme bereitet.

Auch hier sind die beiden Ringkammern 15,16 radial übereinander angeordnet, wodurch eine optimale Wärmeübertragung vom kühleren Medium zur Vorlageflüssigkeit gewährleistet ist. Die radial innenliegende Ringkammer 16 ist dabei mit dem Vorlagebehälter 18 verbunden.

Wie sich insbesondere bei der Vorrichtung nach der Figur 1 ersehen läßt, ist auf der jeweils der Dichtung 11 axial abgewandten Seite der Kühlkammer 13 eine weitere Dichtung 19 angeordnet. Die eine dieser Dichtungen 19 dichtet in Fig. 1 atmosphärenseitig ab, während die zweite dieser Dichtungen 19 gegen den Ringkanal 9 des kühlen Mediums abdichtet.

Bei der Vorrichtung nach Fig. 3 dagegen erfolgt die Abdichtung durch die Dichtung 19 gegen einen Ringkanal für ein weiteres Medium.

Im übrigen sind in Fig. 3 zur Anbindung der Kühlkammer 13 an den Kreislauf des kühleren Mediums außerhalb des Dichtkopfes 1 verlaufende Schlauchverbindungen 20 vorgesehen. In gleicher Weise ist auch der Vorlagebehälter 18 über eine Schlauchverbindung 21 mit der Ringkammer 16 verbunden. Da die Längsachse 22 der Vorrichtung nach der Fig. 3 im Betrieb vertikal ausgerichtet ist, wobei der Vorlagebehälter 18 oberhalb angeordnet ist, fließt die Vorlageflüssigkeit selbsttätig in die Ringkammer 16 nach.

## Patentansprüche

1. Vorrichtung zum Zuführen wenigstens zweier Medien zu einem rotierenden Drucksystem, nämlich einem heißen Medium und einem demgegenüber kühleren Medium, bestehend aus einem Dichtkopfgehäuse (1) sowie einem im Inneren des Dichtkopfgehäuses (1) angeordneten Rotor (2), die beide gegenseitig zueinander drehbar gelagert sind, wobei das Dichtkopfgehäuse (1) und der Rotor (2) mit Zulauf- und Ablauföffnungen (4,5,6,7) für die Medien versehen sind, die über im Innern des Dichtkopfgehäuses (1) verlaufende Verbindungsleitungen (10) sowie über im Bereich zwischen Dichtkopfgehäuse (1) und Rotor (2) angeordnete Ringkanäle (8,9) miteinander in Verbindung stehen, ferner mit wenigstens einer Dichtung (11,12), vorzugsweise Gleitringdichtung, die einseits oder jeweils beidseits der Ringkanäle (8,9) den Rotor (2) gegen das Dichtkopfgehäuse (1) abdichten, wobei in wärmeleitendem Kontakt mit der/den an den Ringkanal (8) für das heiße Medium angrenzenden Dichtung/en (11) eine ringförmige Kühlkammer (13) angeordnet ist, die über Abzweigleitungen (14) sowohl mit der Zulauföffnung (5) als auch der Ablauföffnung (7) für das kühlere Medium in Verbindung steht und von diesem durchströmt wird, **dadurch gekennzeichnet, daß** bei gleicher Materialbeschaffenheit des heißen Mediums und des kühleren Mediums, insbesondere bei Verwendung von Wärmeträgeröl, die Kühlkammer (13) von zwei radial übereinander angeordneten Ringkammern (15,16) gebildet ist, die beide über wenigstens einen Querkanal (17) miteinander verbunden sind, wobei die radial äußere Ringkammer (15) zu dem die Dichtung (11) aufnehmenden Ringraum (8) hin offen und mit der Zulauföffnung (5) für das kühlere Medium verbunden ist, während die radial innere Ringkammer (16) mit der Ablauföffnung (7) für das kühlere Medium verbunden ist.

2. Vorrichtung zum Zuführen wenigstens zweier Medien zu einem rotierenden Drucksystem, nämlich einem heißen Medium und einem demgegenüber kühleren Medium, bestehend aus einem Dichtkopfgehäuse (1) sowie einem im Inneren des Dichtkopfgehäuses (1) angeordneten Rotor (2), die beide gegenseitig zueinander drehbar gelagert sind, wobei das Dichtkopfgehäuse (1) und der Rotor (2) mit Zulauf- und Ablauföffnungen (4,5,6,7) für die Medien versehen sind, die über im Innern des Dichtkopfgehäuses (1) verlaufende Verbindungsleitungen (10) sowie über im Bereich zwischen Dichtkopfgehäuse (1) und Rotor (2) angeordnete Ringkanäle (8,9) miteinander in Verbindung stehen, ferner mit wenigstens einer Dichtung (11,12), vorzugsweise Gleitringdichtung, die einseits oder jeweils beidseits der Ringkanäle (8,9) den Rotor (2) gegen das Dichtkopfgehäuse (1) abdichten, wobei in wärmeleitendem Kontakt mit der/den an den Ringkanal (8) für das heiße Medium angrenzenden Dichtung/en (11) eine ringförmige Kühlkammer (13) angeordnet ist, die über Abzweigleitungen (14) sowohl mit der Zulauföffnung (5) als auch der Ablauföffnung (7) für das kühlere Medium in Verbindung steht und von diesem durchströmt wird, **dadurch gekennzeichnet, daß** bei ungleicher Materialbeschaffenheit des heißen Mediums und des kühleren Mediums, insbesondere bei Verwendung von Wärmrträgeröl für das heiße Medium und von Wasser für das kühlere Medium, die Kühlkammer (13) von zwei Ringkammern (15,16) gebildet ist, von denen die erste mit der Zulauföffnung (5) sowie der Ablauföffnung (7) für das kühlere Medium unter Bildung eines Kühlkreislaufes verbunden ist, während die zweite Ringkammer (16) zu dem die Dichtung (11) aufnehmenden Ringraum auf der dem heißen Medium abgewandten Seite hin offen ist und mit einem Vorlagebehälter (18) mit kühler vorlageflüssigkeit verbunden ist, wobei die Vorlagefüssigkeit von gleicher Materialbeschaffenheit ist wie das heiße Medium.

3. Vorrichtung nach Anspruch 1, **dadurch gekennzeichnet, daß** die Zulauföffnung (5) und die Ablauföffnung (7) einander benachbart angeordnet sind und der Querkanal (17) diesen radial gegenüberstehend angeordnet ist.

4. Vorrichtung nach Anspruch 2, **dadurch gekennzeichnet, daß** die beiden Ringkammern (15,16) radial übereinander angeordnet sind, wobei die radial innenliegende Ringkammer (16) mit dem Vorlagebehälter (18) verbunden ist.

5. Vorrichtung nach einem der Ansprüche 1 bis 4, **dadurch gekennzeichnet, daß** auf der der Dichtung (11) axial abgewandten Seite der Kühlkammer (13) eine weitere Dichtung (19) angeordnet ist, die entweder atmosphärenseitig oder gegen einen Ringkanal für ein weiteres Medium abdichtet.

## Claims

1. Device for feeding at least two media to a rotating pressurized system, namely a hot medium and a comparatively cooler medium, consisting of a sealing-head casing (1) and a rotor (2) arranged inside the sealing-head casing (1), both of which are housed rotatable relative to each other, wherein the sealing-head casing (1) and the rotor (2) are provided with inlet and outlet openings (4,5,6,7) for the media, which are connected to each other via connection pipes (10) running inside the sealing-head casing (1) and also via ring channels (8,9) arranged in the area between sealing-head casing (1) and rotor (2), also with at least one seal (11,12), preferably a sliding-ring seal, sealing the rotor (2) off from the sealing-head casing (1) on one side or both sides of the ring channels (8,9) in each case, wherein there is arranged in heat-conducting contact with the seal(s) (11) adjoining the ring channel (8) for the hot medium an annular cooling chamber (13) which is connected via branch conduits (14) to both the inlet opening (5) and the outlet opening (7) for the cooler medium which flows through it, **characterized in that** when the hot medium and the cooler medium have the same material properties, in particular when heat-transfer oil is used, the cooling chamber (13) is formed by two annular chambers (15,16) arranged radially one above the other, both of which are connected to each other via at least one transverse channel (17), wherein the radially outer annular chamber (15) is open to the annular space (8) housing the seal (11) and connected to the inlet opening (5) for the cooler medium, while the radially inner annular chamber (16) is connected to the outlet opening (7) for the cooler medium.

2. Device for feeding at least two media to a rotating pressurized system, namely a hot medium and a comparatively cooler medium, consisting of a sealing-head casing (1) and a rotor (2) arranged inside the sealing-head casing (1), both of which are housed rotatable relative to each other, wherein the sealing-head casing (1) and the rotor (2) are provided with inlet and outlet openings (4,5,6,7) for the media, which are connected to each other via connection pipes (10) running inside the sealing-head casing (1) and also via ring channels (8,9) arranged in the area between sealing-head casing (1) and rotor (2), also with at least one seal (11,12), preferably a sliding-ring seal, sealing the rotor (2) off from the sealing-head casing (1) on one side or both sides of the ring channels (8,9) in each case, wherein there is arranged in heat-conducting contact with the seal(s) (11) adjoining the ring channel (8) for the hot medium an annular cooling chamber (13) which is connected via branch conduits (14) to both the inlet opening (5) and the outlet opening (7) for the cooler medium which flows through it, **characterized in that** when the hot medium and the cooler medium have different material properties, in particular when heat-transfer oil is used for the hot medium and water for the cooler medium, the cooling chamber (13) is formed by two annular chambers (15,16), the first of which is connected to the inlet opening (5) and the outlet opening (7) for the cooler medium, forming a cooling circuit in the process, while the second annular chamber (16) is open to the annular space housing the seal (11) on the side facing away from the hot medium and is connected to a receiver (18) with a cool receiver liquid, wherein the receiver liquid has the same material properties as the hot medium.

3. Device according to claim 1, **characterized in that** the inlet opening (5) and the outlet opening (7) are arranged adjacent to each other and the transverse channel (17) is arranged radially opposite them.

4. Device according to claim 2, **characterized in that** the two annular chambers (15,16) are arranged radially one above the other, wherein the radially inner annular chamber (16) is connected to the receiver (18).

5. Device according to one of claims 1 to 4, **characterized in that** on the side of the cooling chamber (13) axially facing away from the seal (11), a further seal (19) is arranged which seals off either on the atmosphere side or from a ring channel for a further medium.

## Revendications

1. Dispositif pour amener au moins deux fluides à un système rotatif de pression, à savoir un fluide chaud et un fluide plus froid, ce dispositif comprenant :
- un boîtier de tête d'étanchéité (1) à l'intérieur duquel est monté un rotor (2), ces deux parties (1 et 2) étant montées en rotation l'une par rapport à l'autre, et équipées pour les fluides d'ouvertures d'amenée et de sortie (4, 5, 6, 7) qui sont reliées entre elles par l'intermédiaire de conduites de liaison (10) situées à l'intérieur du boîtier de tête d'étanchéité (1) et par des canaux annulaires (8, 9) disposés dans la zone entre le boîtier de tête d'étanchéité (1) et le rotor (2),
- au moins un joint d'étanchéité (11, 12), de préférence un joint à bague de glissement, assurant l'étanchéité du rotor (2) par rapport au boîtier de tête d'étanchéité (1) d'un côté ou des deux côtés des canaux annulaires (8, 9),
- une chambre annulaire de refroidissement (13) qui est en contact thermoconducteur avec le ou les joints (11) délimitant le fluide chaud le long du canal annulaire (8), et qui est reliée par des conduites de dérivation (14) à la fois à l'ouverture d'amenée (5) et à l'ouverture de sortie (7) pour le fluide plus froid par lequel elle est traversée,
**caractérisé en ce que** quand le fluide chaud et le fluide plus froid sont des matériaux de même nature, en particulier quand on utilise de l'huile caloporteuse, la chambre de refroidissement (13) est constituée de deux chambres annulaires (15, 16) superposées radialement en étant reliées par au moins un canal transversal (17), la chambre annulaire (15) située radialement vers l'extérieur étant ouverte sur l'espace annulaire (8) accueillant le joint d'étanchéité (11) en étant reliée à l'ouverture d'amenée (5) du fluide plus froid, tandis que la chambre annulaire (16) située radialement vers l'intérieur est reliée à l'ouverture de sortie (7) du fluide plus froid.

2. Dispositif pour amener au moins deux fluides à un système rotatif de pression, à savoir un fluide chaud et un fluide plus froid, ce dispositif comprenant :
- un boîtier de tête d'étanchéité (1) à l'intérieur duquel est monté un rotor (2), ces deux parties (1 et 2) étant montées en rotation l'une par rapport à l'autre, et équipées pour les fluides d'ouvertures d'amenée et de sortie (4, 5, 6, 7) qui sont reliées entre elles par l'intermédiaire de conduites de liaison (10) situées à l'intérieur du boîtier de tête d'étanchéité (1) et par des canaux annulaires (8, 9) disposés dans la zone entre le boîtier de tête d'étanchéité (1) et le rotor (2),
- au moins un joint d'étanchéité (11, 12), de préférence un joint à bague de glissement, assurant l'étanchéité du rotor (2) par rapport au boîtier de tête d'étanchéité (1) d'un côté ou des deux côtés des canaux annulaires (8, 9),
- une chambre annulaire de refroidissement (13) qui est en contact thermoconducteur avec le ou les joints (11) délimitant le fluide chaud le long du canal annulaire (8), et qui est reliée par des conduites de dérivation (14) à la fois à l'ouverture d'amenée (5) et à l'ouverture de sortie (7) pour le fluide plus froid par lequel elle est traversée,
**caractérisé en ce que** quand le fluide chaud et le fluide plus froid sont des matériaux de natures différentes, en particulier quand on utilise de l'huile caloporteuse pour le fluide chaud et de l'eau pour le fluide plus froid, la chambre de refroidissement (13) est composée de deux chambres annulaires (15, 16) dont la première (15) est reliée à l'ouverture d'amenée (5) ainsi qu'à l'ouverture de sortie (7) du fluide plus froid en formant un circuit de refroidissement, tandis que la seconde chambre annulaire (16) est ouverte sur l'espace annulaire accueillant le joint d'étanchéité (11) du côté éloigné du fluide chaud, en étant reliée à un récipient d'alimentation (18) contenant le fluide d'alimentation froid qui est de même nature que le fluide chaud.

3. Dispositif selon la revendication 1, **caractérisé en ce que** l'ouverture d'amenée (5) et l'ouverture de sortie (7) sont proches l'une de l'autre et radialement opposées au canal transversal (17).

4. Dispositif selon la revendication 2, **caractérisé en ce que** les deux chambres annulaires (15, 16) sont radialement superposées, la chambre annulaire (16) située radialement vers l'intérieur étant reliée au récipient d'alimentation (18).

5. Dispositif selon une des revendications 1 à 4, **caractérisé en ce que** sur le côté de la chambre de refroidissement (13) éloigné axialement du joint d'étanchéité (11) se trouve un autre joint d'étanchéité (19) qui assure l'étanchéité soit par rapport à l'atmosphère soit par rapport à un canal annulaire pour un autre fluide.
